# FASCICULE DE BREVET EUROPEEN

(11) **EP 3 426 544 B1**
(45) Date de publication et mention de la délivrance du brevet: **03.11.2021**
(21) Numéro de dépôt: 17712198.5
(22) Date de dépôt: 27.02.2017
(51) Int. Cl.: B62D 35/00, B62D 35/02, B62D 37/02

(54) **DISPOSITIF DEFLECTEUR DE ROUE ET MODULE DE FACE AVANT CORRESPONDANT**
RADDEFLEKTOR UND ENTSPRECHENDES FRONTENDMODUL
WHEEL DEFLECTOR DEVICE AND CORRESPONDING FRONT-END MODULE

(30) Priorité: 09.03.2016 FR 1651969
(43) Date de publication de la demande: 16.01.2019
(73) Titulaire: Valeo Systemes Thermiques, 78320 Le Mesnil Saint Denis (FR)
(72) Inventeur: HERLEM, Jean-Paul, 78180 MONTIGNY LE BRETONNEUX (FR); GERBER, Sylvain, 91320 WISSOUS (FR)
(74) Mandataire: Valeo Systèmes Thermiques
(86) Numéro de dépôt international: PCT/FR2017/050428
(87) Numéro de publication internationale: WO 2017/153662

(56) Documents cités:
- EP-A1- 0 051 093
- WO-A2-2015/191697
- DE-A1- 3 218 670
- FR-A1- 2 959 195
- FR-A1- 2 970 218
- JP-A- H05 105 124
- JP-A- 2007 022 149

## Description

L'invention concerne un dispositif déflecteur pour roue de véhicule automobile. On parle généralement de dispositif déflecteur aérodynamique. L'invention concerne aussi un véhicule automobile équipé d'un tel dispositif déflecteur.

Une préoccupation constante dans le domaine automobile est la consommation de carburant et l'impact écologique du véhicule notamment par ses émissions de gaz à effet de serre comme le CO₂ ou par des gaz toxiques comme par exemple les Nox. Pour diminuer la consommation en carburant, les constructeurs automobiles tentent de rendre d'une part plus efficaces les moteurs de propulsion, et d'autre part de diminuer la consommation des équipements du véhicule.

Un facteur important dans la consommation d'un véhicule est déterminé par la prise au vent ou l'aérodynamisme du véhicule.

En effet, l'aérodynamisme d'un véhicule automobile est une caractéristique importante car il influence notamment la consommation de carburant (et donc la pollution) ainsi que les performances notamment d'accélération dudit véhicule.

En particulier, la trainée ou la résistance aérodynamique à l'avancement joue un rôle déterminant, notamment à des vitesses plus élevées, car la trainée varie en fonction du carré de la vitesse de déplacement du véhicule.

Selon les modèles utilisés en mécanique des fluides, on peut par exemple quantifier la force de traînée qui s'exerce sur un véhicule automobile à l'aide d'une surface de référence S. En première approximation, la force de traînée, notée Fx, est égale à q^{∗}S^{∗}Cx, où q désigne la pression dynamique (q = ½ ρ^{∗}V², ρ désignant la masse volumique de l'air et V la vitesse du véhicule par rapport à l'air), Cx désignant un coefficient de traînée propre au véhicule.

La surface de référence utilisée pour un véhicule automobile correspond habituellement à sa surface frontale. On comprend donc que pour réduire la traînée, il faut viser à réduire la surface de référence.

L'analyse des phénomènes aérodynamiques plus en détail a permis de mettre à jour aussi le rôle déterminant des roues de véhicule.

En effet, les roues peuvent augmenter considérablement la résistance aérodynamique, car elles génèrent des turbulences lorsque le flux d'air frappe la roue en rotation. À des vitesses élevées, il a été démontré que les roues avant peuvent contribuer jusqu'à une valeur de 30% à la surface de référence.

En effet, lorsqu'un véhicule automobile se déplace, l'air dans lequel il évolue est dévié en fonction du profil du véhicule. L'air ainsi dévié atteint notamment le passage de roue. Le passage de roue est une cavité aménagée dans la carrosserie du véhicule, et entourant une roue (cela correspond à l'aile du véhicule). Le passage de roue remplit plusieurs fonctions. Il limite notamment (en les retenant) les projections d'eau, de boue ou d'autres matériaux sur lesquels la roue est susceptible de circuler et qu'elle peut être amenée à expulser lors de sa rotation. L'air atteignant le passage de roue circule notamment dans l'espace étroit séparant la roue du passage de roue. Il est connu qu'à cette occasion, des turbulences se forment autour des tours de roue et créent un frein aérodynamique.

Selon une solution connue, un déflecteur fixe est placé devant une roue de véhicule automobile. Un tel déflecteur fixe, qui peut prendre la forme d'une bavette (souvent d'environ 5cm de hauteur), permet de réduire les turbulences dans le passage de roue. Cependant, un tel déflecteur fixe risque d'être endommagé lors de franchissements d'obstacles (trottoir, ralentisseur de type dos d'âne, etc.).

Pour résoudre ce problème, il a été envisagé d'équiper le dispositif déflecteur d'un actionneur pour déplacer une paroi déflectrice montée mobile sur le véhicule entre d'une part une position escamotée dans laquelle la paroi déflectrice est relevée, et d'autre part une position déployée dans laquelle la paroi déflectrice est abaissée et placée en amont de la roue du véhicule.

Le document WO2015191697A2 décrit un déflecteur pour roue de véhicule automobile selon le préambule de la revendication 1.

La présente invention vise à proposer une alternative pour l'actionnement de la paroi déflectrice.

À cet effet, l'invention a pour objet un dispositif déflecteur pour roue de véhicule automobile, comprenant un socle et une paroi déflectrice configurée pour être montée mobile par rapport au socle entre :
- une position déployée dans laquelle la paroi déflectrice est abaissée par rapport au socle et
- une position escamotée dans laquelle la paroi déflectrice est relevée par rapport au socle.

Selon l'invention, le dispositif déflecteur comporte un mécanisme articulé de déplacement de la paroi déflectrice comprenant au moins une biellette reliée à la paroi déflectrice, de manière à permettre le déplacement de ladite paroi déflectrice entre les positions escamotée et déployée par l'intermédiaire de ladite au moins une biellette.

Le mécanisme articulé à biellette(s) est un système simple permettant lorsqu'il est actionné, notamment par un moteur électrique, de déplacer la paroi déflectrice entre les positions escamotée et déployée et inversement.

Selon l'invention, le mécanisme articulé comprend au moins deux jeux de biellettes, chaque jeu de biellettes comprenant au moins une première et une deuxième biellette articulées entre elles. Ceci permet de stabiliser la paroi déflectrice en bonne position et équilibrer la pression exercée sur cette dernière. Le dispositif déflecteur comporte au moins deux barres transversales reliant les deux premières biellettes.

Le dispositif déflecteur peut en outre comporter une ou plusieurs des caractéristiques suivantes prises seules ou en combinaison :
- la paroi déflectrice est configurée pour être entraînée en pivotement par l'intermédiaire de ladite au moins une biellette ;
- le dispositif déflecteur comporte un actionneur configuré pour commander le mécanisme articulé, de manière à permettre le déplacement de ladite paroi déflectrice entre les positions escamotée et déployée par l'intermédiaire de ladite au moins une biellette sous l'action de l'actionneur ;
- le mécanisme articulé comprend au moins deux biellettes articulées entre elles ;
- le mécanisme articulé comprend au moins une première biellette et une deuxième biellette articulées entre elles, la première biellette étant en prise avec l'actionneur et la deuxième biellette étant attachée de façon articulée au socle, de sorte que la première biellette, lorsqu'elle est entraînée par l'actionneur, transmette un mouvement à la deuxième biellette ;
- le socle comporte au moins un bras fixe présentant un point d'articulation pour ladite au moins une deuxième biellette ;
- l'actionneur est en prise avec au moins une desdites barres transversales, de façon à entraîner les premières biellettes par l'intermédiaire de ladite au moins une barre transversale ;
- les deux premières biellettes sont agencées de façon parallèle, et la barre transversale est agencée de façon sensiblement perpendiculaire aux deux premières biellettes ;
- le dispositif déflecteur comporte deux barres transversales reliant les deux premières biellettes ;
- l'actionneur est fixé sur la paroi déflectrice ;
- la paroi déflectrice comprend une partie centrale et deux parties latérales opposées de part et d'autre de la partie centrale ;
- la partie centrale de la paroi déflectrice est destinée à être disposée en amont de la roue dans le trajet d'un flux d'air en direction de la roue lorsque la paroi déflectrice est dans la position déployée à l'état monté du dispositif déflecteur sur le véhicule automobile ;
- le dispositif déflecteur comprend un premier support et un deuxième support respectivement agencés sur une partie latérale de la paroi déflectrice, le premier support étant configuré pour porter l'actionneur et une première extrémité d'au moins une desdites barres transversales entre les deux premières biellettes et le deuxième support étant configuré pour porter la deuxième extrémité de ladite barre transversale ;
- le socle présente une forme sensiblement longitudinale et est configuré pour être monté sur le véhicule automobile avec son axe longitudinal sensiblement parallèle à l'axe longitudinal du véhicule, et la paroi déflectrice est montée mobile en pivotement sur le socle par l'intermédiaire d'un axe de pivotement sensiblement parallèle à l'axe transversal du socle.

L'invention a aussi pour objet un dispositif déflecteur, par exemple tel que défini précédemment, comportant en outre un moyen de rappel élastique agencé de manière à exercer une force de rappel sur la paroi déflectrice pour la maintenir dans la position déployée, et tel qu'en cas de choc s'opposant à la force de rappel, la paroi déflectrice est déplacée de la position déployée vers la position escamotée.

Avec un tel moyen de rappel élastique, le dispositif déflecteur, et en particulier sa paroi déflectrice, peut s'effacer lors d'un choc avec un objet étranger au véhicule alors que la paroi déflectrice était en position déployée évitant ainsi de l'endommager lors du choc.

Le dispositif déflecteur comporte un système d'articulation par exemple tel que le mécanisme articulé à biellette(s) décrit précédemment.

Le dispositif déflecteur peut en outre comporter une ou plusieurs des caractéristiques suivantes prises seules ou en combinaison :
- le moyen de rappel élastique est configuré pour ramener la paroi déflectrice dans la position déployée lorsque la force s'opposant à la force de rappel cesse. Le moyen de rappel élastique laisse ainsi la paroi déflectrice reprendre sa place après le choc ;
- le moyen de rappel élastique est fixé sur le socle configuré pour être monté sur ledit véhicule et sur lequel la paroi déflectrice est montée mobile entre les positions escamotée et déployée ;
- le moyen de rappel élastique présente au moins une extrémité libre disposée en appui élastique contre la paroi déflectrice ;
- le moyen de rappel élastique est réalisé sous forme de ressort à lame présentant au moins une lame flexible ;
- ladite au moins une lame flexible est agencée de manière à exercer une force de rappel au niveau des parties latérales de la paroi déflectrice ;
- le moyen de rappel élastique comporte une base à partir de laquelle ladite au moins une lame flexible s'étend ;
- le socle présente une forme longitudinale et la base du moyen de rappel élastique s'étend dans le sens de la largeur du socle.

L'invention concerne aussi un module de face avant pour véhicule automobile, caractérisé en ce qu'il comprend au moins un dispositif déflecteur tel que défini précédemment.

À l'état monté sur le véhicule automobile et dans la position déployée, la paroi déflectrice est abaissée et s'étend en amont de la roue dudit véhicule de manière à dévier un flux d'air destiné à s'écouler en direction de la roue.

À l'état monté sur le véhicule automobile et dans la position escamotée, la paroi déflectrice est relevée de manière à libérer le passage pour l'écoulement du flux d'air.

D'autres caractéristiques et avantages de l'invention apparaîtront plus clairement à la lecture de la description suivante, donnée à titre d'exemple illustratif et non limitatif, et des dessins annexés parmi lesquels :
- la figure la montre un schéma de côté d'un dispositif déflecteur monté sur un véhicule automobile, en position escamotée,
- la figure 1b montre un schéma de côté du dispositif déflecteur monté sur un véhicule automobile, en position déployée,
- la figure 2a est une première vue en perspective de côté du dispositif déflecteur des figures 1a et 1b en position escamotée,
- la figure 2b est une deuxième vue en perspective de côté du dispositif déflecteur de la figure 2a en position escamotée,
- la figure 3a est une première vue en perspective de côté du dispositif déflecteur des figures 1a et 1b dans une position intermédiaire entre la position escamotée et la position déployée,
- la figure 3b est une deuxième vue en perspective de côté du dispositif déflecteur de la figure 3b dans la position intermédiaire,
- la figure 4a est une première vue en perspective de côté du dispositif déflecteur des figures 1a et 1b en position déployée,
- la figure 4b est une deuxième vue en perspective de côté du dispositif déflecteur de la figure 4a en position déployée,
- la figure 5 est une vue éclatée du dispositif déflecteur des figures la à 4b, et
- la figure 6 est une représentation très schématique en perspective d'un dispositif déflecteur pourvu d'un moyen de rappel élastique.

Dans la description, des éléments identiques sont identifiés par les mêmes numéros de référence.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées ou interchangées pour fournir d'autres réalisations.

Dans la description, on peut indexer certains éléments, comme par exemple premier élément ou deuxième élément. Dans ce cas, il s'agit d'un simple indexage pour différencier et dénommer des éléments proches mais non identiques. Cette indexation n'implique pas une priorité d'un élément par rapport à un autre et on peut aisément interchanger de telles dénominations sans sortir du cadre de la présente description. Cette indexation n'implique pas non plus un ordre dans le temps.

Dans la présente description, on entend par « en amont » qu'un élément est placé avant un autre par rapport au sens de circulation du flux d'air. À contrario, on entend par « en aval » qu'un élément est placé après un autre par rapport au sens de circulation du flux d'air. Par supérieur et inférieur, haut et bas, ou relevé et abaissé, on se réfère à la disposition des éléments sur les figures, ce qui correspond généralement à la disposition des éléments à l'état monté dans un véhicule automobile.

Un repère LTH sur une figure indique respectivement les directions longitudinale L, transversale T et en hauteur H. La direction L correspond à une direction horizontale dans le sens de la longueur du véhicule, la direction T correspond à une direction horizontale dans le sens de la largeur du véhicule et la direction H correspond à une direction verticale dans le sens de la hauteur du véhicule.

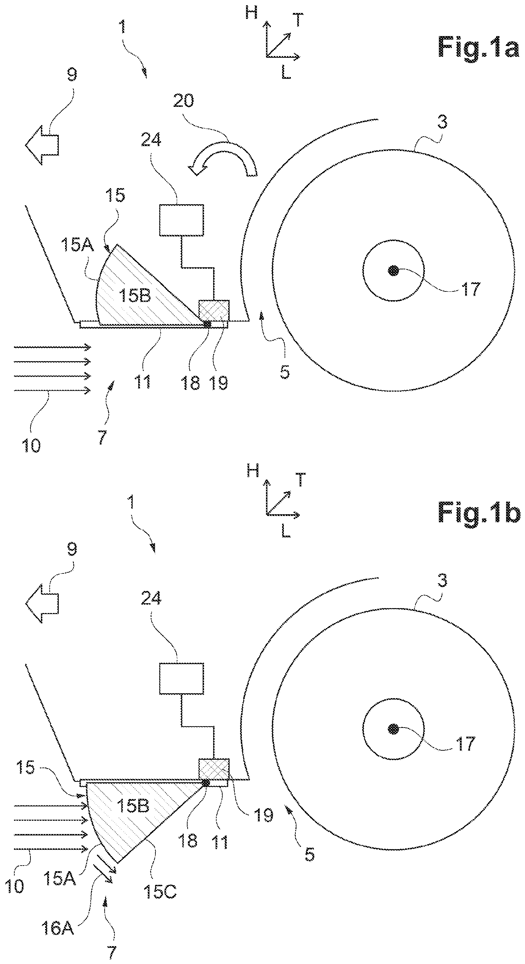

Les figures 1a et 1b montrent un schéma simplifié de côté d'une partie avant 1 d'un véhicule automobile, montrant en particulier une roue 3, un passage de roue 5 et un dispositif déflecteur 7 pour roue selon l'invention équipant le véhicule.

Sur les schémas des figures la et 1b, le sens de progression du véhicule en marche avant est illustré par la flèche 9, et le flux d'air impactant le véhicule et notamment la roue 3 en sens inverse est illustré par les flèches 10.

Le dispositif déflecteur 7 est destiné à être agencé de manière à pouvoir dévier le flux d'air 10 impactant le véhicule et notamment la roue 3, tel qu'illustré sur la figure 1b, et empêcher ce flux d'air 10 de s'engouffrer dans le passage de roue 5 risquant de former un frein aérodynamique. Un tel dispositif déflecteur 7 est aussi nommé dispositif déflecteur aérodynamique 7 dans la mesure où il contribue à améliorer l'aérodynamisme du véhicule sur lequel il est monté.

Le dispositif déflecteur aérodynamique 7 comprend avantageusement un socle 11. Afin de permettre l'agencement du dispositif déflecteur 7 sur le véhicule automobile, le socle 11 est configuré pour être monté sur le véhicule automobile, par exemple fixé au châssis du véhicule en amont de la roue 3 et à proximité du passage de roue 5. Le socle 11 est généralement reçu dans un logement sur le châssis prévu à cet effet.

Le socle 11 peut présenter une forme générale sensiblement longitudinale et est configuré pour être monté sur le véhicule avec son axe longitudinal sensiblement parallèle à l'axe longitudinal L du véhicule.

Selon le mode de réalisation illustré, le socle 11 est réalisé sous forme de cadre de forme rectangulaire configuré pour être fixé au véhicule, par exemple par vissage ou par des agrafes ou tout autre moyen de fixation. On parle également de platine 11.

En outre, le dispositif déflecteur aérodynamique 7 comprend une paroi déflectrice 15.

Dans cet exemple, la paroi déflectrice 15 comporte une partie centrale 15A et deux parties latérales 15B opposées s'étendant de part et d'autre de la partie centrale 15A.

La partie centrale 15A est destinée à être disposée, à l'état monté du dispositif déflecteur 7 sur le véhicule et en position déployée de la paroi déflectrice 15, en amont de la roue 3 dans le trajet d'écoulement du flux d'air 10.

Selon l'exemple illustré, les parties latérales 15B définissent par exemple des secteurs de cercle. La partie centrale 15A relie dans cet exemple les extrémités en arc de cercle des parties latérales 15B.

Pour éviter par exemple que de la boue ou autre salissure ne puisse s'accumuler à l'intérieur du volume défini par la paroi déflectrice 15, on prévoit avantageusement une partie de fermeture 15C (voir figure 1b) reliant les bords inférieurs des parties centrale 15A et latérales 15B. La paroi déflectrice 15 avec la partie centrale 15A, les parties latérales 15B et la paroi de fermeture 15C définissent alors un corps seulement ouvert d'un côté, ici du côté supérieur, et ayant une forme générale d'une pelle, ou plus précisément une forme de godet de pelle mécanique de chantier.

La paroi déflectrice 15 est, selon l'exemple illustré, montée mobile par rapport au socle 11, ici en forme de cadre, entre d'une part une position escamotée (voir figure la) et d'autre part une position abaissée ou déployée (voir figure 1b). La paroi déflectrice 15 est destinée à être montée mobile sur le véhicule automobile entre la position escamotée (voir figure la) et la position abaissée ou déployée (voir figure 1b).

Dans la position escamotée, la paroi déflectrice 15 est relevée et ne fait aucun obstacle au flux d'air 10 impactant la roue 5 à l'état monté sur le véhicule automobile. À cet effet, la paroi déflectrice 15 peut être relevée dans un logement situé en amont du passage de roue 5. Cette position escamotée est généralement adoptée pour des vitesses peu élevées, par exemple inférieures à 50km/h. En effet, pour des petites vitesses, l'effet de la paroi déflectrice 15 est peu important, notamment par rapport à la surface de référence. De plus, l'on franchit des obstacles comme par exemple des trottoirs, des ralentisseurs de type dos d'âne, coussin berlinois, ou autre généralement à des vitesses inférieures à environ 50km/h. En prenant la position escamotée à ces vitesses faibles, la paroi déflectrice 15 est protégée contre la casse.

Dans la position abaissée ou déployée montrée à la figure 1b, et à l'état monté sur le véhicule automobile, la paroi déflectrice 15 est placée dans le trajet du flux d'air 10 en amont de la roue 3 du véhicule. Selon le mode de réalisation décrit, dans cette position déployée, la paroi déflectrice 15 est au moins partiellement en dessous de l'axe de pivotement 17 de la roue 3. De la sorte, le flux d'air 10 est dévié de manière à ne pas pouvoir s'engouffrer dans le passage de roue 5. Le flux d'air 10 est notamment dévié vers le bas, en direction du sol ou de la route, comme cela est schématisé par la flèche 16A sur la figure 1b. Le flux d'air 10 peut également être dévié sur les côtés.

On évite ainsi la création des turbulences dans le passage de roue 5 qui contribueraient à l'augmentation significative de la surface de référence. On parle également dans ce cas de position active de la paroi déflectrice 15. Ainsi, la force de trainée peut être contenue à des valeurs plus acceptables.

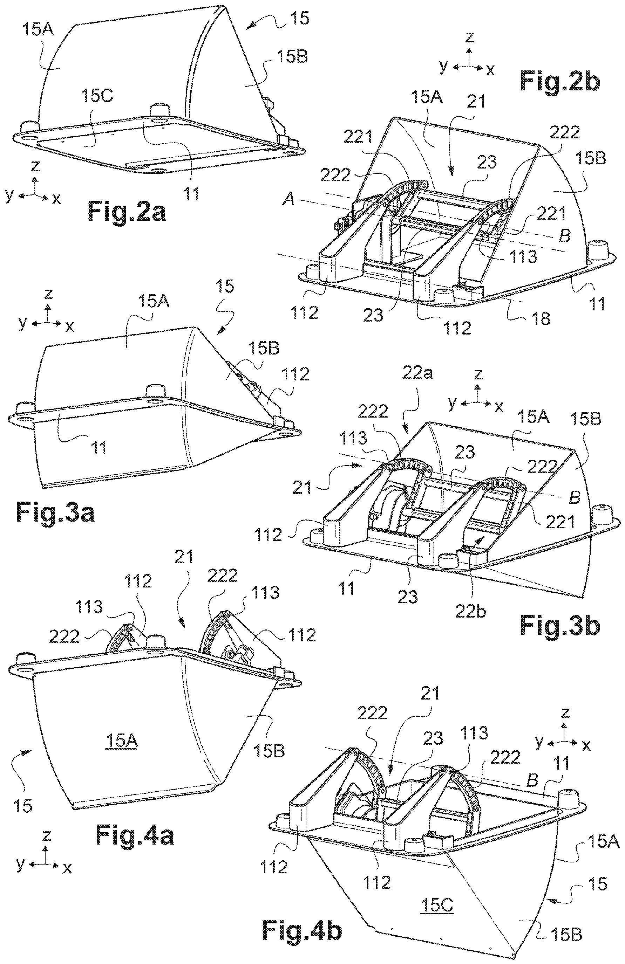

La paroi déflectrice 15 est mieux visible sur les figures 2a à 4b.

Sur ces figures 2a à 4b, un trièdre xyz est représenté. On adoptera à titre non limitatif la terminologie longitudinale, transversale et verticale en référence à ce trièdre xyz. L'axe x indique la direction longitudinale correspondant à la direction d'extension principale des parties latérales 15B de la paroi déflectrice 15. L'axe y indique la direction transversale par rapport aux deux parties latérales 15B de la paroi déflectrice 15 et l'axe z correspond à une direction verticale dans le sens de la hauteur de la paroi déflectrice 15. Selon l'exemple particulier illustré, la direction longitudinale du socle 11 coïncide avec l'axe x, et la direction transversale selon la largeur du socle 11 coïncide avec l'axe y. Selon l'agencement de la paroi déflectrice 7 sur le véhicule, les directions x, y, z peuvent correspondre respectivement aux directions longitudinale L, transversale T et en hauteur H du repère défini par rapport au véhicule 1 sur les figures la et 1b, comme c'est le cas selon le mode de réalisation illustré.

Les figures 2a à 4b montrent différentes positions de la paroi déflectrice 15 à savoir, une position escamotée (figures 2a et 2b), une position intermédiaire (figures 3a et 3b) et une position déployée (figures 4a et 4b).

À titre d'exemple, la paroi déflectrice 15 est montée mobile en rotation. Plus précisément, la paroi déflectrice 15 est ici reliée de façon pivotante au socle 11 par l'intermédiaire d'un axe de pivotement 18 (figures la et 1b). Comme indiqué par la flèche 20 sur la figure 1a, la paroi déflectrice 15 peut donc tourner autour de cet axe de pivotement 18.

Selon l'exemple illustré, l'axe de pivotement 18 est agencé selon la direction transversale y de la paroi déflectrice 15. L'axe de pivotement 18 est en outre orienté sensiblement perpendiculairement à l'axe longitudinal x de la paroi déflectrice 15. À l'état monté du dispositif déflecteur aérodynamique 7 sur le véhicule, l'axe de pivotement 18 peut être sensiblement parallèle à l'axe transversal T du véhicule. L'axe de pivotement 18 est par exemple un axe physique.

Dans cet exemple, la paroi déflectrice 15 est reliée de manière pivotante au socle 11 par ces parties latérales 15B. Pour ce faire, les extrémités libres des parties latérales 15B sont articulées autour de l'axe de pivotement 18. Il s'agit ici des extrémités des parties latérales 15B opposées à l'arc de cercle.

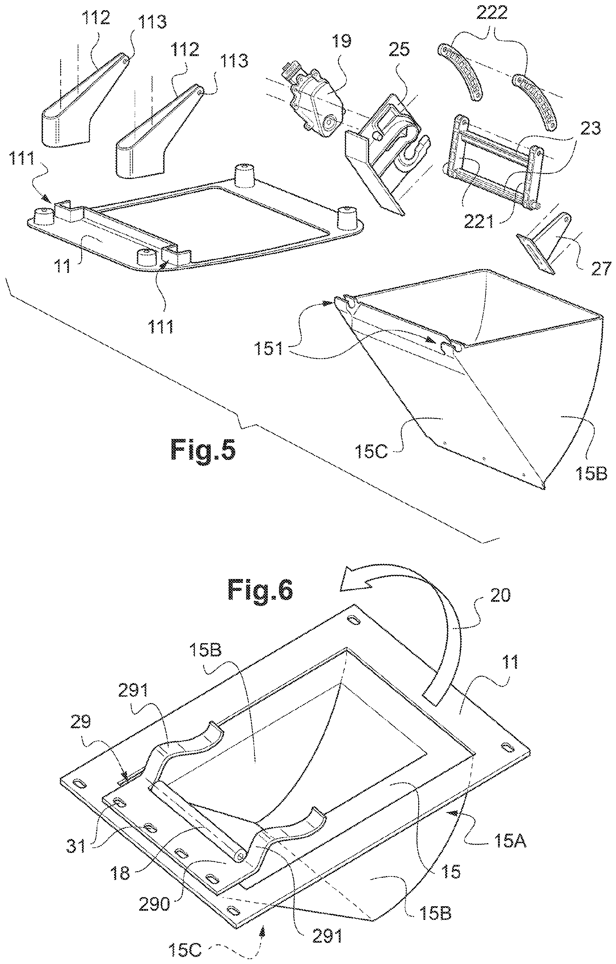

La paroi déflectrice 15 présente à cet effet des moyens de liaison pivot 151, visibles sur la figure 5, entre les extrémités des parties latérales 15B et l'axe de pivotement 18. Les moyens de liaison pivot 151 présentent dans cet exemple une forme ouverte complémentaire de la forme de l'axe de pivotement 18. De façon complémentaire, le socle 11 présente des renfoncements 111 au niveau desquels sont agencés les moyens de liaison pivot 151 lorsque la paroi déflectrice 15 est montée sur le socle 11.

Selon un mode de réalisation avantageux, pour déplacer la paroi déflectrice 15 entre les positions escamotée (figures 1a, 2a, 2b) et déployée (figures 1b, 4a, 4b), le dispositif déflecteur aérodynamique 7 comprend en outre un actionneur 19, à savoir ici un actionneur électrique.

L'actionneur 19 peut être un moteur électrique, aussi appelé micromoteur, et comprend un organe de sortie par exemple rotatif.

Pour pouvoir opérer ce déplacement, le dispositif déflecteur 7 comporte préférentiellement un mécanisme articulé 21 de déplacement de la paroi déflectrice 15 mieux visible sur les figures 2b, 3b et 4b. Ce mécanisme articulé 21 est configuré pour être commandé par l'actionneur 19. Le mécanisme articulé 21 est donc relié d'une part à l'actionneur 19 et d'autre part à la paroi déflectrice 15.

L'actionneur 19 est configuré pour déplacer, ici faire tourner (voir flèche 20 de la figure la), la paroi déflectrice 15 depuis sa position escamotée vers la position déployée, et inversement, par l'intermédiaire de ce mécanisme articulé 21.

Le mécanisme articulé 21 comprend au moins une biellette 221, 222 reliée à la paroi déflectrice 15, par l'intermédiaire de laquelle la paroi déflectrice 15 peut être déplacée, ici en pivotement, entre les positions escamotée (figures 1a, 2a, 2b) et déployée (figures 1b, 4a, 4b) en passant par une ou plusieurs positions intermédiaires (figues 3a, 3b).

En référence aux figures 2b, 3b, 4b et 5, le mécanisme articulé 21 comprend au moins deux biellettes 221, 222 articulées entre elles

Dans cet exemple, au moins une première biellette 221 est reliée à l'actionneur 19, ou plus précisément à un organe de sortie de l'actionneur 19, et au moins une deuxième biellette 222 est articulée sur une première biellette 221 associée. Il en résulte que l'actionneur 19 permet de mettre en mouvement la première biellette 221 qui, à son tour, permet de mettre en mouvement la deuxième biellette 222.

À titre d'exemple particulier et non limitatif, la première biellette 221 présente une forme de tige sensiblement droite. Cette première biellette 221 est dans cet exemple articulée à ses deux extrémités.

La deuxième biellette 222 présente ici une forme sensiblement courbe. Cette deuxième biellette 222 est articulée dans cet exemple seulement à son extrémité reliée à la première biellette 221 associée.

Le mécanisme articulé 21 comprend au moins deux jeux de biellettes 22a, 22b, chaque jeu de biellettes 22a, 22b comprenant au moins deux biellettes 221 et 222. Ainsi, le mécanisme articulé 21 comprend un premier jeu 22a comprenant une première biellette 221 et une deuxième biellette 222 articulées entre elles, et un deuxième jeu 22b comprenant une première biellette 221 et une deuxième biellette 222 articulées entre elles.

Les deux jeux 22a, 22b de biellettes articulées et liées à la paroi déflectrice 15, permettent de stabiliser cette dernière en bonne position et d'équilibrer la pression exercée sur la paroi déflectrice 15, lors du déploiement de la paroi déflectrice 15.

Avantageusement, les deux premières biellettes 221 peuvent être reliées l'une à l'autre, par exemple par l'intermédiaire d'au moins une barre 23. Il s'agit ici d'une barre transversale 23, s'étendant sensiblement parallèlement à l'axe transversal y de la paroi déflectrice 15. Dans l'exemple illustré, les deux premières biellettes 221 sont agencées de façon parallèle, et la barre transversale 23 est agencée de façon sensiblement perpendiculaire aux deux premières biellettes 221.

Pour une bonne tenue mécanique, le dispositif déflecteur comporte au moins deux barres transversales 23 reliant les deux premières biellettes 221. Les deux barres 23 peuvent s'étendre de façon sensiblement parallèle. Dans cet exemple, une barre transversale 23, dite barre inférieure, permet la liaison entre les premières biellettes 221 et l'actionneur 19. La barre transversale 23 inférieure s'étend selon un axe A schématisé sur la figure 2b sensiblement parallèle à l'axe transversal y. De plus, au moins une autre barre transversale 23, dite barre supérieure, est agencée à proximité des points d'articulation entre les premières biellettes 221 et les deuxièmes biellettes 222.

La forme de la ou des barres 23, ici transversales, de liaison entre les premières biellettes 221 peut être adaptée selon les besoins.

Les barres transversales 23 sont par exemple réalisées d'une seule pièce avec les premières biellettes 221. L'ensemble des deux premières biellettes 221 et des deux barres transversales 23 forment un levier qui est destiné à être mis en mouvement par l'actionneur 19, et à transmettre à son tour un mouvement aux deuxièmes biellettes 222.

En outre selon le mode de réalisation décrit, c'est la (ou les) première(s) biellette(s) 221 qui est (sont) reliée(s) à la paroi déflectrice 15 de façon à lui transmettre un mouvement.

Pour ce faire, selon le mode de réalisation particulier illustré, le dispositif déflecteur 7 comporte au moins un premier support 25 et un deuxième support 27 (voir figure 5) respectivement fixés sur la paroi déflectrice 15 et prévus pour porter chacun une extrémité respective d'une barre transversale 23, ici la barre transversale inférieure, reliant les deux premières biellettes 221. Autrement dit, le premier support 25 porte une première extrémité d'une barre transversale 23, ici la barre transversale inférieure, et le deuxième support 27 porte la deuxième extrémité de cette même barre transversale 23, ici la barre transversale inférieure 23.

En particulier, chaque support 25, 27 peut être agencé et fixé sur une partie latérale 15B respective de la paroi déflectrice 15. Plus précisément, les supports 25, 27 sont ici agencés du côté intérieur des parties latérales 15B, c'est-à-dire du côté du volume ouvert défini par les parties latérales 15B, la partie centrale 15A et la partie de fermeture 15C de la paroi déflectrice 15. Les deux supports 25, 27 sont donc agencés en vis-à-vis sur les parties latérales 15B.

Le premier support 25 est en outre configuré pour porter l'actionneur 19. L'actionneur 19 est donc fixé sur la paroi déflectrice 15. L'organe de sortie de l'actionneur 19 est de plus en prise avec la première extrémité de la barre transversale 23, par exemple inférieure, reçue dans le même support 25 que l'actionneur 19. Ainsi, l'actionneur 19 entraîne les premières biellettes 221 ou plus généralement le levier par cette barre transversale inférieure 23.

Par ailleurs, la ou chaque deuxième biellette 222 articulée sur une première biellette 221 associée est d'autre part attachée de façon articulée au socle 11 qui est lui fixe. À cet effet, le socle 11 comporte au moins un bras fixe 112, deux bras fixes 112 dans le cas de deux jeux de biellettes 22a, 22b, et chaque bras 112 présente un point d'articulation 113 pour une deuxième biellette 222 associée.

Par ailleurs, dans cet exemple, les deuxièmes biellettes 222 et les bras fixes 112 associés sont tels que dans la position escamotée (voir figure 2b), les deuxièmes biellettes 222 sont respectivement agencées dans l'alignement du bras fixe 112 associé.

On décrit maintenant plus précisément les mouvements du mécanisme articulé 21 tel que décrit précédemment lorsque l'actionneur 19 est mis en route, qu'il s'agisse du déploiement ou de la rétractation, autrement dit le retour en position escamotée, de la paroi déflectrice 15.

L'organe de sortie de l'actionneur 19 entraîne la ou les premières biellettes 221 en pivotement autour de l'axe A schématisé sur la figure 2b par l'intermédiaire de la barre transversale 23, dite barre inférieure. Le mouvement de pivotement de la ou chaque première biellette 221 est transmis à une deuxième biellette associée 222 ainsi qu'à la paroi déflectrice 15. La ou les deuxièmes biellettes 222 sont entraînées à leur tour en pivotement autour d'un axe B transversal, schématisé sur les figures 2b et 3b, sensiblement parallèle à l'axe transversal y de la paroi déflectrice 15, ou autrement dit autour du point d'articulation 113 du bras fixe 112 sur lequel la deuxième biellette 222 est articulée. Et, la paroi déflectrice 15, entraînée par la ou les premières biellettes 221, pivote à son tour autour de l'axe de pivotement 18 parallèle à l'axe transversal y.

Par ailleurs, en se référant de nouveau aux figures la et 1b, le dispositif déflecteur 7 peut comprendre en outre une unité de commande 24 reliée à l'actionneur 19 et configurée pour activer ou mettre en route l'actionneur 19 lorsque la paroi déflectrice 15 doit être déplacée en position déployée ou à l'inverse en position escamotée.

L'unité de commande 24 comprend par exemple un circuit électronique tel qu'un microprocesseur ou un microcontrôleur recevant une information de vitesse depuis un capteur de vitesse, et ordonnant le déploiement ou la rétractation de la paroi déflectrice 15 en conséquence.

Selon une mise en œuvre possible, un mécanisme d'hystérésis est prévu afin d'éviter les effets de seuil. Ainsi, il est possible de prévoir que l'unité de commande 24 déclenche le déploiement de la paroi déflectrice 15 dès que la vitesse dépasse un seuil donné (par exemple 50km/h), mais que la rétractation de la paroi déflectrice 15 ne soit déclenchée que lorsque la vitesse redescend en dessous d'un seuil inférieur au seuil précité (par exemple un seuil de 40km/h). Ainsi, le circuit évite de déclencher de façon intempestive des alternances de déploiement et de rétractation lorsque le véhicule circule à une vitesse proche du seuil initial et passe en permanence d'un côté et de l'autre de ce seuil.

Selon encore une autre variante, l'unité de commande 24 peut recevoir aussi des données de géolocalisation associées avec des informations sur la situation de conduite. Ainsi par exemple, l'unité de commande 24 peut être configurée pour inhiber tout déploiement de la paroi déflectrice 15 en agglomération où la vitesse est limitée. En effet, c'est en agglomération qu'il y a le plus de risque de devoir franchir des obstacles pouvant endommager la paroi déflectrice 15.

On comprend donc que le dispositif déflecteur aérodynamique 7 simple et facile à mettre en œuvre permet d'améliorer la trainée aérodynamique du véhicule et donc en particulier la consommation en carburant du véhicule tout en permettant par son caractère commandé ou actif le franchissement d'obstacles à vitesse basse en toute sécurité.

La figure 6 illustre un autre mode de réalisation avantageux alternatif ou en complément du mode de réalisation avec un actionneur 19 et un mécanisme articulé 21 précédemment décrit. La description du premier mode de réalisation en référence aux figures la à 5 s'applique aux composants identiques, seules les différences sont maintenant décrites.

Selon le mode de réalisation illustré de façon très schématique sur la figure 6, le dispositif déflecteur 7 comporte un moyen de rappel élastique 29 agencé de manière à exercer une force de rappel sur la paroi déflectrice 15 pour la maintenir dans la position déployée. Ce moyen de rappel élastique 29 est configuré pour qu'en cas de choc sur la paroi déflectrice 15 s'opposant à la force de rappel, la paroi déflectrice 15 qui était déployée soit déplacée vers la position escamotée. Il s'agit d'un choc extérieur au véhicule tel qu'un obstacle ou un élément imprévu sur la route. Lorsqu'un tel choc se produit alors que la paroi déflectrice 15 est déployée, et donc alors que le véhicule se déplace à une vitesse par exemple supérieure à 50km/h, le moyen de rappel élastique 29 permet à la paroi déflectrice 15 de se rétracter vers l'intérieur du compartiment moteur par exemple, évitant ainsi d'endommager la paroi déflectrice 15.

Préférentiellement, cette rétractation de la paroi déflectrice 15 est temporaire et la paroi déflectrice 15 ne reste pas dans la position escamotée après le choc. Autrement dit, le moyen de rappel élastique 29 est configuré pour ramener la paroi déflectrice 15 dans la position déployée lorsque la force s'opposant à la force de rappel cesse.

Selon l'exemple particulier illustré, le moyen de rappel élastique 29 peut être fixé sur le socle 11. Pour cela dans cet exemple, le moyen de rappel élastique 29 comporte une base 290 qui peut être fixée sur le socle 11 par tout moyen de fixation 31 approprié. Dans le cas où le socle 11 présente une forme longitudinale ici sous forme de cadre, la base 290 du moyen de rappel élastique 29 s'étend dans le sens de la largeur du socle 11 et est fixé sur une paroi latérale du socle 11.

Le moyen de rappel élastique 29 présente en outre au moins une extrémité libre disposée en appui élastique contre la paroi déflectrice 15.

Le moyen de rappel élastique 29 est par exemple réalisé sous forme de ressort à lame. Dans ce cas, le moyen de rappel élastique 29 comporte au moins une lame flexible 291 s'étendant à partir de la base 290 pour venir en appui élastique contre la paroi déflectrice 15.

Selon le mode de réalisation décrit, le moyen de rappel élastique 29 comporte deux lames flexibles 291 s'étendant depuis la base 290. Dans cet exemple chaque lame flexible 291 est agencée de manière à exercer une force de rappel au niveau d'une partie latérale 15B de la paroi déflectrice 15. Plus précisément, les lames flexibles 291 viennent en appui élastique contre les bords supérieurs des parties latérales 15B de la paroi déflectrice 15.

Ainsi, le moyen de rappel élastique 29 tel qu'un ressort à lames permet au dispositif déflecteur 7, plus précisément ici à la paroi déflectrice 15, de s'effacer lors d'un choc avec un objet étranger au véhicule et reprendre sa place, en position déployée, par la suite.

Un tel moyen de rappel élastique 29 peut notamment être combiné avec un mécanisme articulé 21 à biellette(s) tel que décrit précédemment.

Bien entendu, d'autres modes de réalisations ou exemples sont envisageables sans sortir du cadre de la présente invention. Toutefois, l'invention est définie par les revendications annexées.

## Revendications

1. Dispositif déflecteur (7) pour roue (3) de véhicule automobile, comprenant un socle (11) et une paroi déflectrice (15) configurée pour être montée mobile par rapport au socle (11) entre :
- une position déployée et
- une position escamotée,
le dispositif déflecteur (7) comportant un mécanisme articulé (21) de déplacement de la paroi déflectrice (15) comprenant au moins une biellette (221, 222) reliée à la paroi déflectrice (15), de manière à permettre le déplacement de ladite paroi déflectrice (15) entre les positions escamotée et déployée par l'intermédiaire de ladite au moins une biellette (221, 222),
le mécanisme articulé (21) comprenant au moins deux jeux de biellettes (22a, 22b), chaque jeu de biellettes (22a, 22b) comprenant au moins une première et une deuxième biellette(221, 222) articulées entre elles, **caractérisé en ce que** le dispositif déflecteur (7) comporte au moins deux barres transversales (23) reliant les deux premières biellettes (221).

2. Dispositif déflecteur (7) selon la revendication précédente, dans lequel la paroi déflectrice (15) est configurée pour être entraînée en pivotement par l'intermédiaire de ladite au moins une biellette (221, 222).

3. Dispositif déflecteur (7) selon l'une des revendications précédentes, comportant un actionneur (19) configuré pour commander le mécanisme articulé (21), de manière à permettre le déplacement de ladite paroi déflectrice (15) entre les positions escamotée et déployée par l'intermédiaire de ladite au moins une biellette (221, 222) sous l'action de l'actionneur (19).

4. Dispositif déflecteur (7) selon la revendication précédente, dans lequel l'actionneur (19) est fixé sur la paroi déflectrice (15).

5. Dispositif déflecteur (7) selon l'une quelconque des revendications précédentes, dans lequel le mécanisme articulé (21) comprend au moins deux biellettes (221, 222) articulées entre elles.

6. Dispositif déflecteur (7) selon la revendication 5 prise en combinaison avec l'une des revendications 3 ou 4, dans lequel le mécanisme articulé (21) comprend au moins une première biellette (221) et une deuxième biellette (222) articulées entre elles, la première biellette (221) étant reliée à l'actionneur (19) et la deuxième biellette (222) étant attachée de façon articulée au socle (11), de sorte que la première biellette (221), lorsqu'elle est entraînée par l'actionneur (19), transmette un mouvement à la deuxième biellette (222).

7. Dispositif déflecteur (7) selon la revendication 6, dans lequel :
- l'actionneur (19) est en prise avec au moins une desdites barres transversales (23), de façon à entraîner les premières biellettes (221) par l'intermédiaire de ladite au moins une barre transversale (23).

8. Dispositif déflecteur selon l'une quelconque des revendications précédentes, dans lequel la paroi déflectrice (15) comprend :
- une partie centrale (15A) et
- deux parties latérales (15B) opposées de part et d'autre de la partie centrale (15A).

9. Dispositif déflecteur (7) selon les revendications 7 et 8,
- comprenant un premier support (25) et un deuxième support (27) respectivement agencés sur une partie latérale (15B) de la paroi déflectrice (15),
- dans lequel le premier support (25) est configuré pour porter l'actionneur (19) et une première extrémité d'au moins une desdites barres transversales (23) entre les deux premières biellettes (221), et
- dans lequel le deuxième support (27) est configuré pour porter la deuxième extrémité d'au moins une desdites barres transversales (23).

10. Dispositif déflecteur (7) selon l'une quelconque des revendications précédentes, comportant en outre un moyen de rappel élastique (29) agencé de manière à exercer une force de rappel sur la paroi déflectrice (15) pour la maintenir dans la position déployée, et tel qu'en cas de choc s'opposant à la force de rappel, la paroi déflectrice (15) est déplacée de la position déployée vers la position escamotée.

11. Module de face avant pour véhicule automobile, **caractérisé en ce qu'**il comprend au moins un dispositif déflecteur (7) selon l'une quelconque des revendications précédentes.

## Patentansprüche

1. Deflektorvorrichtung (7) für ein Rad (3) eines Kraftfahrzeugs, beinhaltend eine Basis (11) und eine Deflektorwand (15), die dazu konfiguriert ist, mit Bezug auf die Basis (11) beweglich zwischen Folgendem montiert zu sein:
- einer ausgefahrenen Stellung und
- einer eingefahrenen Stellung,
wobei die Deflektorvorrichtung (7) einen Gelenkmechanismus (21) zur Verlagerung der Deflektorwand (15) umfasst, der mindestens einen Arm (221, 222), der mit der Deflektorwand (15) verbunden ist, beinhaltet, um die Verlagerung der Deflektorwand (15) zwischen der eingefahrenen und der ausgefahrenen Stellung mit Hilfe des mindestens einen Arms (221, 222) zu gestatten,
wobei der Gelenkmechanismus (21) mindestens zwei Sätze Arme (22a, 22b) beinhaltet, wobei jeder Satz Arme (22a, 22b) mindestens einen ersten und einen zweiten Arm (221, 222) beinhaltet, die untereinander gelenkig verbunden sind, **dadurch gekennzeichnet, dass** die Deflektorvorrichtung (7) mindestens zwei Querstangen (23) umfasst, die die zwei ersten Arme (221) verbinden.

2. Deflektorvorrichtung (7) nach dem vorhergehenden Anspruch, wobei die Deflektorwand (15) dazu konfiguriert ist, mit Hilfe des mindestens einen Arms (221, 222) schwenkend angetrieben zu werden.

3. Deflektorvorrichtung (7) nach einem der vorhergehenden Ansprüche, die ein Stellglied (19) umfasst, das dazu konfiguriert ist, den Gelenkmechanismus (21) zu steuern, um die Verlagerung der Deflektorwand (15) zwischen der eingefahrenen und der ausgefahrenen Stellung mit Hilfe des mindestens einen Arms (221, 222) unter Einwirkung des Stellglieds (19) zu gestatten.

4. Deflektorvorrichtung (7) nach dem vorhergehenden Anspruch, wobei das Stellglied (19) an der Deflektorwand (15) befestigt ist.

5. Deflektorvorrichtung (7) nach einem der vorhergehenden Ansprüche, wobei der Gelenkmechanismus (21) mindestens zwei Arme (221, 222) beinhaltet, die untereinander gelenkig verbunden sind.

6. Deflektorvorrichtung (7) nach Anspruch 5 in Kombination mit einem der Ansprüche 3 oder 4, wobei der Gelenkmechanismus (21) mindestens einen ersten Arm (221) und einen zweiten Arm (222), die untereinander gelenkig verbunden sind, beinhaltet, wobei der erste Arm (221) mit dem Stellglied (19) verbunden ist und der zweite Arm (222) gelenkig an der Basis (11) angebracht ist, sodass der erste Arm (221), wenn er durch das Stellglied (19) angetrieben wird, eine Bewegung auf den zweiten Arm (222) überträgt.

7. Deflektorvorrichtung (7) nach Anspruch 6, wobei:
- das Stellglied (19) mit mindestens einer der Querstangen (23) in Eingriff ist, um die ersten Arme (221) mit Hilfe der mindestens einen Querstange (23) anzutreiben.

8. Deflektorvorrichtung nach einem der vorhergehenden Ansprüche, wobei die Deflektorwand (15) Folgendes beinhaltet:
- einen mittigen Abschnitt (15A) und
- zwei gegenüberliegende seitliche Abschnitte (15B) auf beiden Seiten des mittigen Abschnitts (15A).

9. Deflektorvorrichtung (7) nach den Ansprüchen 7 und 8,
- beinhaltend einen ersten Träger (25) und einen zweiten Träger (27), die jeweils an einem seitlichen Abschnitt (15B) der Deflektorwand (15) angeordnet sind,
- wobei der erste Träger (25) dazu konfiguriert ist, das Stellglied (19) und ein erstes Ende mindestens einer der Querstangen (23) zwischen den zwei ersten Armen (221) zu tragen und
- wobei der zweite Träger (27) dazu konfiguriert ist, das zweite Ende mindestens einer der Querstangen (23) zu tragen.

10. Deflektorvorrichtung (7) nach einem der vorhergehenden Ansprüche, die ferner ein elastisches Rückstellmittel (29) umfasst, das derart angeordnet ist, dass es eine Rückstellkraft auf die Deflektorwand (15) ausübt, um sie in der ausgefahrenen Stellung zu halten, und derart, dass im Fall eines Stoßes, der der Rückstellkraft entgegenwirkt, die Deflektorwand (15) von der ausgefahrenen in die eingefahrene Stellung verlagert wird.

11. Frontendmodul für ein Kraftfahrzeug, **dadurch gekennzeichnet, dass** es mindestens eine Deflektorvorrichtung (7) nach einem der vorhergehenden Ansprüche beinhaltet.

## Claims

1. Deflector device (7) for a wheel (3) of a motor vehicle, comprising a baseplate (11) and a deflector wall (15) which is configured to be mounted with the ability to move with respect to the baseplate (11) between:
- a deployed position and
- a retracted position,
the deflector device (7) comprising an articulated mechanism (21) for moving the deflector wall (15), comprising at least one link rod (221, 222) connected to the deflector wall (15) so as to allow said deflector wall (15) to be moved between the retracted and deployed position via said at least one link rod (221, 222),
the articulated mechanism (21) comprising at least two sets of link rods (22a, 22b), each set of link rods (22a, 22b) comprising at least a first and a second link rod (221, 222) articulated to one another, **characterized in that** the deflector device (7) comprises at least two transverse bars (23) connecting the two first link rods (221) .

2. Deflector device (7) according to the preceding claim, wherein the deflector wall (15) is configured to be made to pivot via said at least one link rod (221, 222) .

3. Deflector device (7) according to one of the preceding claims, comprising an actuator (19) configured to operate the articulated mechanism (21) so as to allow said deflector wall (15) to be moved between the retracted and deployed position by means of said at least one link rod (221, 222) under the action of the actuator (19) .

4. Deflector device (7) according to the preceding claim, wherein the actuator (19) is fixed to the deflector wall (15) .

5. Deflector device (7) according to any one of the preceding claims, wherein the articulated mechanism (21) comprises at least two link rods (221, 222) articulated to one another.

6. Deflector device (7) according to Claim 5 considered in combination with one of Claims 3 and 4, wherein the articulated mechanism (21) comprises at least a first link rod (221) and a second link rod (222) articulated to one another, the first link rod (221) being connected to the actuator (19) and the second link rod (222) being attached in an articulated manner to the base plate (11) so that the first link rod (221), when driven by the actuator (19), transmits movement to the second link rod (222) .

7. Deflector device (7) according to Claim 6, wherein:
- the actuator (19) is in engagement with at least one of said transverse bars (23) so as to drive the first link rods (221) via said at least one transverse bar (23) .

8. Deflector device (7) according to any one of the preceding claims, wherein the deflector wall (15) comprises:
- a central part (15A) and
- two opposite lateral parts (15B) one on each side of the central part (15A).

9. Deflector device (7) according to Claims 7 and 8,
- comprising a first support (25) and a second support (27) which are arranged respectively on a lateral part (15B) of the deflector wall (15),
- wherein the first support (25) is configured to bear the actuator (19) and a first end of at least one of said transverse bars (23) between the two first link rods (221), and
- wherein the second support (27) is configured to bear the second end of at least one of said transverse bars (23).

10. Deflector device (7) according to any one of the preceding claims, further comprising an elastic return means (29) arranged in such a way as to apply a return force to the deflector wall (15) in order to keep it in the deployed position and such that, in the event of an impact that opposes the return force, the deflector wall (15) is moved from the deployed position towards the retracted position.

11. Motor vehicle front end module, **characterized in that** it comprises at least one deflector device (7) according to any one of the preceding claims.
